# FASCICULE DE BREVET EUROPEEN

(11) **EP 1 261 250 B1**
(45) Date de publication et mention de la délivrance du brevet: **29.09.2004**
(21) Numéro de dépôt: 01909358.2
(22) Date de dépôt: 28.02.2001
(51) Int. Cl.: A01G 3/00, B02C 18/14

(54) **APPAREIL A DECHIQUETER LES PRODUITS VEGETAUX**
VORRICHTUNG ZUM ZERSCHNEIDEN VON PFLANZENGUT
VEGETABLE PRODUCT SHREDDING APPARATUS

(30) Priorité: 28.02.2000 BE 200000157
(43) Date de publication de la demande: 04.12.2002
(73) Titulaire: Hamptaux, Stéphane, St-Thuribe, Québec G0A 4H0 (CA)
(72) Inventeur: Hamptaux, Stéphane, St-Thuribe, Québec G0A 4H0 (CA)
(74) Mandataire: Colens, Alain
(86) Numéro de dépôt international: PCT/BE2001/000030
(87) Numéro de publication internationale: WO 2001/064018

(56) Documents cités:
- EP-A- 0 785 026
- EP-A- 0 956 762
- WO-A-98/09503
- FR-A- 2 113 810

## Description

La présente invention concerne un appareil de déchiquetage de produits végétaux de type ligneux.

Ce type d'appareil sert à découper des produits végétaux en particules homogènes pour en réduire considérablement le volume initial. Le produit obtenu au départ de branchages, broussailles ou autres, devient alors une matière recyclable et facilement utilisable notamment pour l'agriculture ou la foresterie dans la régénération et la fertilisation des sols.

Pareils dispositifs sont bien connus. Ils sont généralement portés sur un châssis mobile, tracté ou autotracté, souvent muni d'un moyen d'alimentation des produits végétaux, d'une chambre de découpe et d'un moyen (goulotte) d'évacuation des morceaux découpés.

La chambre de découpe comprend généralement un système de couteaux monté sur un arbre en rotation (rotor) et d'une contre-lame aussi dénommée enclume. L'arbre du rotor est de préférence entraîné par un moteur.

L'art antérieur comprend entre autres les documents de brevet WO 98/09503, EP 0956762 et EP 0785026. La publication WO 98/09503 divulgue un appareil comprenant un rotor avec des lames perpendiculaires et des lames parallèles à l'axe dudit rotor. Ces lames de turbine ne sont pas des couteaux tranchants et l'appareil est destiné à la récolte d'herbe coupée. Le document EP 956762 B1 divulgue un broyeur à usage agricole présentant un rotor muni de lame orientée dans des plans obliques par rapport à un plan passant par l'axe du rotor. Le document EP 0785026 divulgue un dispositif de coupe essentiellement composé d'une enclume et d'un rotor recevant des jeux de couteaux inclinés.

Le but de la présente invention est de diminuer considérablement les dimensions et la puissance d'un appareil pour déchiqueter des végétaux, tout en gardant , voire même tout en augmentant son efficacité.

Ce but est atteint en proposant un appareil de déchiquetage des végétaux selon la revendication 1 annexée.

Il est en effet très important de pouvoir faire fonctionner ce type d'appareils avec un minimum d'énergie, d'autant plus qu'ils sont souvent utilisés dans des zones isolées. On pense plus particulièrement aux pays en voie de développement là où la consommation énergétique doit être réduite au minimum. Dans d'autres endroits, l'appareil garde toute sa particularité de puissance accrue.

En appliquant ce dispositif de couteaux, on a constaté une réduction significative de la puissance nécessaire au broyage.

Cette réduction peut atteindre une valeur de 20 à 30% par rapport aux appareils classiques.

Le système selon l'invention, combine deux types de couteaux distincts: couteaux d'éclatement ci-après dénommés "couteaux triangulaires" et couteaux de coupe et traction ci-après dénommées "lames droites".

Plus particulièrement, l'invention consiste dans la forme et la disposition particulière d'un système de couteaux monté sur un arbre en rotation.

Cette disposition permet de réaliser les fonctions suivantes:
- auto-alimentation du broyeur sans nécessiter de système annexe pour assurer l'alimentation continue de la machine,
- broyage ou déchiquetage facilité par un effet combiné de fendage progressif (forme triangulaire des couteaux) et de coupe (tronçons déjà dégrossis et éclatés avant que la lame droite ne vienne couper et tirer ceux-ci),
- éjection du produit broyé effectué sans système annexe.

Le système est constitué de deux parties distinctes ( voir schémas):
- une partie en rotation (2200 à 2800 tours minute) dénommée rotor. Cette partie comprend un arbre perpendiculaire au sens de l'alimentation des produits verts, sur lequel sont disposés deux types de couteaux ; lames triangulaires et lames droites,
- une partie dénommée contre-lame qui est réglable ( c'est elle qui va déterminer la finesse ou la grosseur du produit fini selon son réglage). La contre-lame est boulonnée sur le châssis.

L'axe de l'arbre sur lequel sont montés les couteaux triangulaires et les lames droites est donc perpendiculaire au sens d'avancement des produits à broyer et la contre- lame est montée parallèlement au rotor avec un espace X (0,5 à 3 mm).

Les produits à déchiqueter sont introduits dans la goulotte d'alimentation de manière classique. La base des produits (par exemple des branches) est introduite en premier, de manière longitudinale dans le sens des fibres.

Comme indiqué, l'effet de déchiquetage est obtenu par la combinaison de deux systèmes de coupes, réalisés chacun par un type de couteaux distincts: couteaux "triangulaires" de fendage et lames droites.

Les deux groupes de couteaux sont répartis de préférence de façon symétrique sur le rotor du broyeur. Pour permettre la coupe et obtenir la granulométrie souhaitée, on prévoit une contre-lame ou enclume, formant ici le stator du système de coupe.

Dans la présente description, on entend par couteau triangulaire, un couteau ou lame présentant lors de l'opération de coupe, une tranche en oblique permettant la pénétration progressive du couteau dans la matière à découper. Ce couteau présentera une largeur de coupe se réduisant sensiblement vers son extrémité distale par rapport à l'arbre du rotor. Il s'agira par exemple d'un couteau triangulaire, à profil trapézoïdal ou trapézoïde isocèle. Les pointes des lames sont donc de préférence orientées vers l'extérieur du rotor.

Les couteaux sont généralement interchangeables et donc solidarisés de manière connue (boulons, écrous) à un ou plusieurs moyens de supports prévus sur l'arbre rotatif.

Ces moyens de supports sont constitués par exemple de plaques perpendiculaires à l'arbre et rigidement solidarisées à l'arbre, éventuellement par l'intermédiaire de flasques. L'ensemble couteaux, arbre et moyens de supports constituent le rotor.

Il peut y avoir plusieurs rangées de couteaux triangulaires agencées autour de l'axe du rotor.

Par ailleurs, le plan de la lame peut être perpendiculaire à l'axe du rotor ou décalé (incliné) d'un certain angle, variant de préférence de 10 à 45°, plus préférentiellement d'environ 30-35°, suivant la matière verte à traiter et le produit fini souhaité. Les plans des lames resteront verticaux par rapport au plan formé par l'arbre et l'axe d'introduction des produits végétaux.

Dans le cas des couteaux triangulaires inclinés, de préférence deux groupes de couteaux triangulaires sont disposés de façon opposée c'est- à- dire que l'inclinaison du plan du couteau sera orientée vers la droite par rapport au sens d'avancement pour un groupe de couteaux et vers la gauche pour le groupe suivant. Ceci permet à un bois pénétrant l'appareil d'être taillé de biais d'un côté puis de l'autre, présentant ainsi des sections moins importantes pour la découpe par le jeu de lames droites.

De préférence, le nombre des couteaux et leur inclinaison est telle que leurs zones de coupe se superposent (recouvrement de l'espace balayé par les lames). Dans ce cas, il n'y a donc pas d'espace non balayé par les couteaux. Chaque couteau triangulaire travaille sur une largeur donnée. Les couteaux étant légèrement superposés, les déchets à broyer rencontreront donc obligatoirement des couteaux qui assureront leur fendage.

Dans le cas de couteaux triangulaires disposés perpendiculairement à l'axe de rotation, l'espace libre entre les couteaux est réduit au minimum afin d'obtenir le meilleur résultat (granulométrie du produit fini ou broyât).

L'angle d'inclinaison des bords tranchants des couteaux triangulaires, assure une pénétration progressive du tranchant dans le matériau à broyer ; ce qui réduit l'énergie nécessaire.

Les couteaux triangulaires agissent comme des coins et assurent de cette façon le fendage des bois. La contre-lame ou l'enclume fixée au châssis du broyeur, assure la position fixe des produits verts avant la coupe.

Selon l'invention, outre le système de couteaux susmentionné, on prévoit au moins un autre système de couteaux constitué par au moins un couteau solidaire au rotor et dont la lame, c'est- à- dire le plan de coupe, est parallèle audit rotor.

De préférence le couteau s'étend sur une partie substantielle de la longueur de l'arbre rotatif de façon à couvrir la largeur de coupe utile de l'appareil.
Il s'agit de lames rigides disposées parallèlement à l'axe de rotation du broyeur comme dans une raboteuse à bois. Les lames sont fixées sur le rotor et réparties sur la circonférence suivant leur nombre. Les petites machines, développées selon un mode de réalisation simplifié de l'invention, sont pourvues de 2 lames décalées de 180°. Ces couteaux coupent les branches transversalement et provoquent l'alimentation forcée des produits à déchiqueter et il n'est pas nécessaire de prévoir un système d'entraînement pour une alimentation forcée du broyeur et/ou l'éjection du broyât.

L'avancement des produits à déchiqueter est assuré par la position relative de la contre- lame par rapport à l'axe du rotor. Dans ce but, le plan de la contre- lame doit obligatoirement passer sous l'axe de rotation du rotor. Plus cet écart est important, plus l'effet de traction sur les branches sera important.
L'éjection des produits déchiquetés sera assurée par l'effet de balayage obtenu par la rotation rapide des lames droites.

Les deux groupes de couteaux couvrent de préférence toute la largeur de la machine, en laissant un jeu, de par exemple 2 à 3 mm seulement de chaque côté. Le résultat sera un déchiquetage optimal des produits verts.
Les lames droites disposées parallèlement à l'axe et reliées rigidement à celui-ci, coupent transversalement, à une longueur donnée, le bois déjà attaqué par les couteaux triangulaires. Cette longueur est en fonction de la vitesse de rotation du rotor et de la vitesse d'avancement des produits verts. Nous obtenons de façon théorique des tronçons de bois fendus. Ainsi l'énergie fournie par le moteur est utilisée de façon optimale.

Les branches pouvant ainsi être déchiquetées avec l'appareil de l'invention, peuvent atteindre un diamètre d'environ 15 cm et même davantage pour certains types de bois. L'objectif ici, est de mettre en valeur un produit "déchètaire" (considéré jusqu'ici sans valeur). Pour les bois de diamètres supérieurs, ils ont dans la plupart des cas leur utilité ( bois de chauffe, charbon de bois, bois de construction ). Toutefois, il est possible avec la même invention, d'utiliser ce principe en augmentant le diamètre du rotor et le nombre de rangées de couteaux (triangulaires et droits ). Dans ce cas, ce genre de rotor trouve une autre utilité (pâte à papier, panneaux de particules).

Le système de déchiquetage permet la coupe tant des produits verts ligneux que des produits moins rigides (semi-ligneux) tels que plants de maïs, graminées tropicales, (ensilage), bagasse de canne à sucre. Les produits fraîchement coupés peuvent être broyés avec leurs feuillages, ce qui ne nuit pas au bon fonctionnement de l'appareil. Ce dernier point est plus important en zone tropicale où le feuillage est , dans la plupart des cas, de type persistant.

L'invention sera mieux comprise à l'examen des dessins annexés, présentés à titre d'exemple uniquement dans lesquels :
la fig. 1 illustre de manière générale un dispositif selon l'invention,
la fig. 2 illustre le dispositif de la fig. 1 de manière plus détaillée en montrant la chambre de déchiquetage dudit dispositif,
les figs. 3 et 5 illustrent le principe de déchiquetage selon l'invention,
la fig. 4 représente une configuration simple des couteaux triangulaires autour de l'arbre,
la fig. 6 est une vue latérale d'un système de coupe complet,
la fig. 7 illustre une configuration des couteaux plus complexe dans laquelle il y a trois positions de couteaux triangulaires,
la fig. 8 illustre davantage les étapes du déchiquetage selon un mode de réalisation de l'invention.
les figs. 9, 10 et 11 illustrent , respectivement en vue latérale, en coupe et en perspective, une variante à deux rangées de couteaux triangulaires.

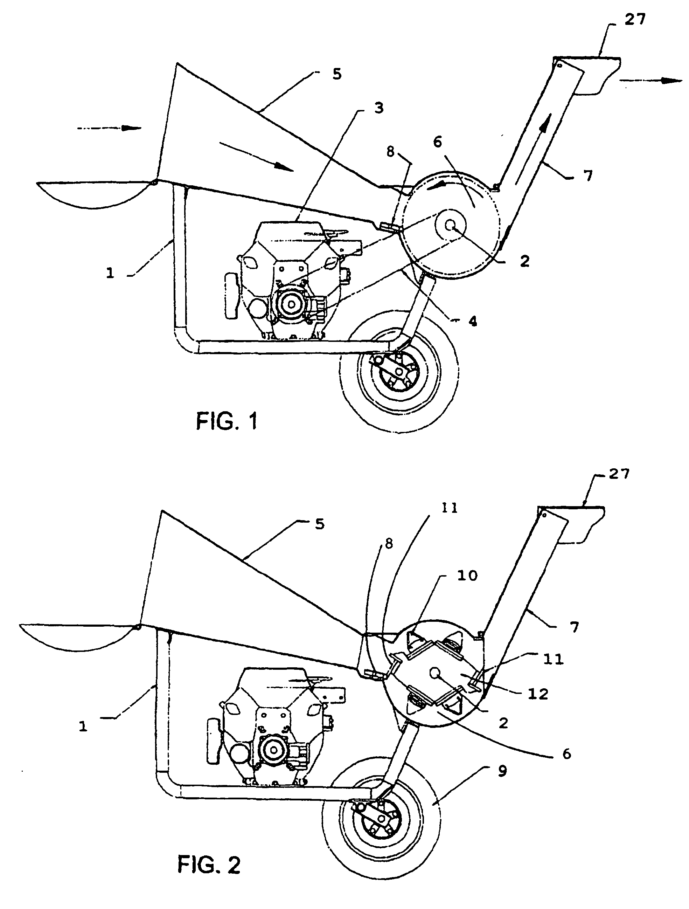

La fig. 1 illustre un engin selon l'invention vu de profil. On distingue un châssis 1 supportant un caisson ou chambre cylindrique ou hémicylindrique 6 dont l'axe est muni d'un arbre rotatif 2 entraîné par un moteur 3 via une courroie 4. Les produits végétaux sont introduits en 5 et éjectés en 7 après passage et déchiquetage dans le caisson 6. On distingue également la contre-lame 8. Le tuyau d'éjection 7 est muni d'un déflecteur 27. Le châssis est monté sur des roues 9 afin de pouvoir être, par exemple, tracté.

La fig.2 illustre de manière plus détaillée la chambre 6 de déchiquetage dudit dispositif. On distingue à nouveau les éléments décrits pour la fig.1. On reconnaît cepoendant dans la chambre 6, le rotor comprenant deux types de couteaux 10 et 11 montés sur des flasques 12 qui seront de préférence soudés à l'arbre 2. De même, deux rangées de couteaux triangulaires 10 sont disposées de part et d'autre de l'arbre, décalées de 90° par rapport aux couteaux droits 11.

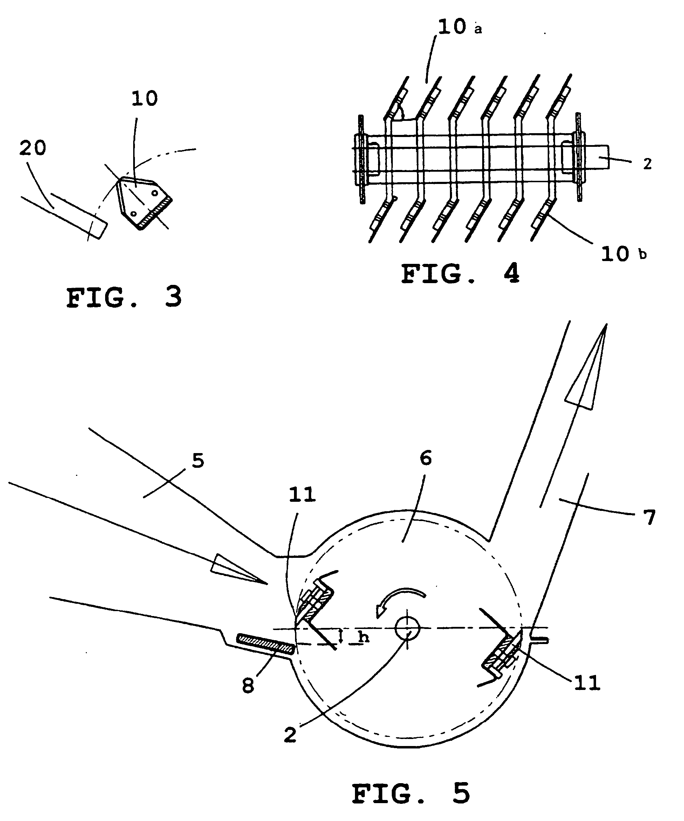

La fig. 3 représente de manière schématique l'action d'une lame 10 sur un élément à déchiqueter 20.

La fig. 4 représente une configuration simple des couteaux triangulaires 10 autour de l'arbre. On remarque deux rangées de couteaux 10a et 10b, les couteaux ou lames étant orientés dans un sens puis dans l'autre après une rotation de 180°.

La fig. 5 illustre le fonctionnement des couteaux droits 11 avec la contre-lame 8. Le plan de la contre-lame doit obligatoirement passer sous l'axe de rotation du rotor. Plus l'écart (h) est important, plus l'effet de traction sur les branches sera important.

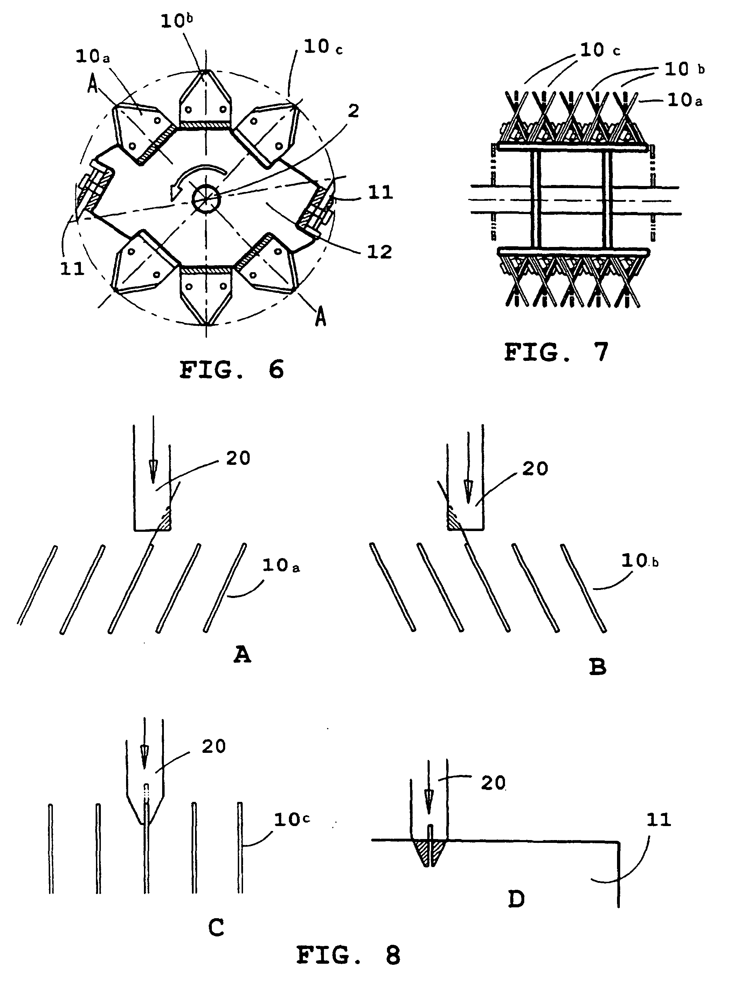

La fig. 6 est une vue de profil d'un rotor complet selon un mode de réalisation de l'invention. On distingue un flasque de support 12 perpendiculaire et solidaire à l'axe 2 du rotor et trois types de lame triangulaires.

La fig. 7 est une vue en coupe frontale montrant les trois types de lames de la fig. 6 .

La fig. 6 illustre montre ainsi le rotor et une lame droite. On distingue 4 types de lames ou couteaux répartis autour de l'axe 2; à savoir les lames triangulaires 10a obliques d'un côté, les lames 10b obliques du côté opposé, les lames triangulaires 10c perpendiculaires à l'axe et les lames droites 11 de coupes transversales .

La découpe se fait en quatre phases représentées schématiquement à la fig. 8 pour un produit végétal allongé 20 : une coupe longitudinale oblique A, une coupe longitudinale oblique opposée B, une coupe longitudinale droite C et une coupe transversale D.

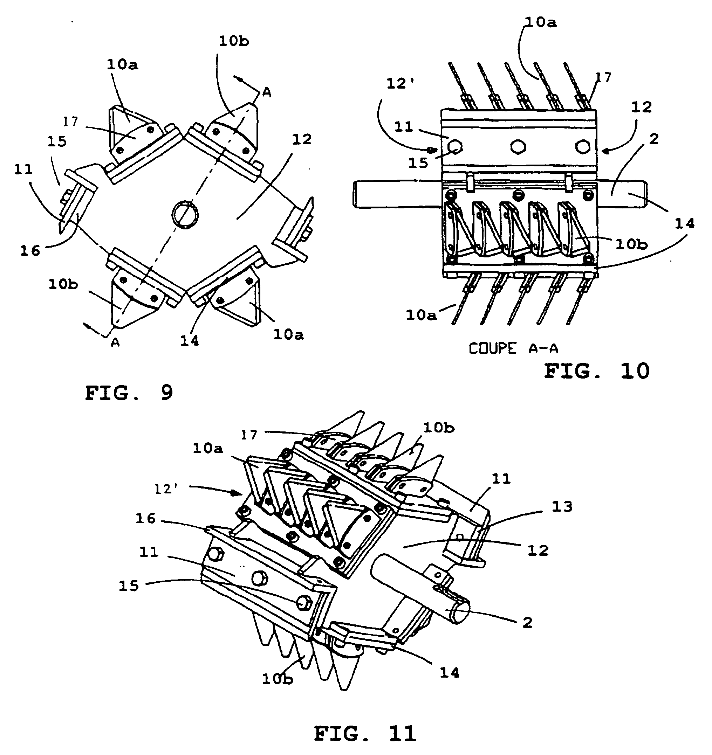

La fig. 9 illustre un autre mode de réalisation d'un rotor à 6 lames vu de profil avec deux types de lame triangulaire 10a, 10b et un type de lame droite 11, la fig. 10 étant une coupe selon le plan A-A de la fig. 9 et la fig. 11 étant une vue en perspective.

On distingue plus clairement, pour cet exemple, un rotor 2 auquel est fixé de chaque côté, par exemple par soudage, deux flasques 12, 12' perpendiculaires à l'arbre du rotor, au contour extérieur apte à recevoir des plaques 13, 16 soudées au flasques et parallèles à l'arbre 2. Ces plaques servent de support à des lames droites 12 ou supports de lames obliques (cassettes) 14 qui seront par exemple fixées par boulons 15. Les lames triangulaires 10a, 10b sont elles-mêmes fixées par des boulons ou vis à des ailerons 17 solidarisés aux plaques de supports 13.

## Revendications

1. Appareil de déchiquetage de végétaux comprenant un moyen (5) d'alimentation des végétaux (20), une partie d'éjection des végétaux déchiquetés (7) et une chambre intermédiaire (6) comprenant un rotor (12) solidaire de plusieurs couteaux (10, 11),
dans lequel au moins un couteau (10) présente un plan perpendiculaire ou incliné par rapport à l'axe (2) du rotor,
**caractérisé en ce qu'**au moins un autre couteau (11) du rotor est parallèle à l'axe de celui-ci et coopère avec une contre-lame (8).

2. Appareil selon la revendication 1 , **caractérisé en ce qu'**il y a plusieurs couteaux (10) agencés en au moins deux rangées de couteaux disposés parallèlement audit axe.

3. Appareil selon la revendication 1 ou 2 **caractérisé en ce qu'**il y a plusieurs couteaux (10) agencés en au moins deux rangées de couteaux ; une rangée de couteaux étant inclinée dans un sens et une autre rangée de couteaux étant inclinée dans l'autre sens.

4. Appareil selon la revendication 3 dans lequel l'autre rangée est la rangée suivante.

5. Appareil selon n'importe laquelle des revendications précédentes comportant autour de l'axe (2) du rotor six couteaux ou rangées de couteaux comprenant deux lames droites (11) opposées, séparées de part et d'autre par deux rangées de couteaux (10), l'une de ces rangées étant inclinée dans un sens et l'autre, dans l'autre sens.

6. Appareil selon n'importe laquelle des revendications 1 à 4 comportant autour de l'axe (2) du rotor huit couteaux ou rangées de couteaux comprenant deux lames droites (11) opposées, séparées de part et d'autre par trois rangées de couteaux (10), l'une de ces rangées étant, par rapport à l'axe (2) du rotor, des couteaux inclinés dans un sens (10A), la suivante inclinée dans l'autre sens (10B) et la suivante présentant une rangée de couteaux perpendiculaires (10C).

7. Appareil selon n'importe laquelle des revendications précédentes dans lequel les couteaux (10) présentent un profil tranchant triangulaire ou trapézoïdal.

8. Appareil selon n'importe laquelle des revendications précédentes dans lequel l'inclinaison du ou des couteaux, incliné(s) par rapport à l'axe du rotor, est inférieure à 45° et varie de préférence entre 20 et 35 °.

## Patentansprüche

1. Vorrichtung zum Zerkleinern von Pflanzen, mit einer Zuführeinrichtung (5) für die Pflanzen (20), einem Auswerferelement für die zerkleinerten Pflanzen (7) und einem Zwischenbehälter (6), der einen mit mehreren Messern (10, 11) bestückten Rotor (12) aufweist, wobei wenigstens ein Messer (10) eine Ebene aufweist, die senkrecht oder schräg in Bezug auf die Achse (2) des Rotors verläuft, **dadurch gekennzeichnet, daß** wenigstens ein anderes Messer (11) des Rotors parallel zu dessen Achse angeordnet ist und mit einer Gegenklinge (8) zusammenwirkt.

2. Vorrichtung gemäß Anspruch 1, **dadurch gekennzeichnet, daß** mehrere Messer (10) vorgesehen sind, die in wenigstens zwei Reihen von Messern angeordnet sind, die parallel zur Achse verlaufen.

3. Vorrichtung gemäß Anspruch 1 oder 2, **dadurch gekennzeichnet, daß** mehrere Messer (10) vorgesehen sind, die in wenigstens zwei Messerreihen angeordnet sind; wobei eine Messerreihe in der einen Richtung geneigt ist und die andere Messerreihe in der anderen Richtung geneigt ist.

4. Vorrichtung gemäß Anspruch 3, wobei die andere Reihe die nachfolgende Reihe ist.

5. Vorrichtung gemäß einem der vorhergehenden Ansprüche, wobei um die Achse (2) des Rotors herum sechs Messer oder Reihen von Messern vorgesehen sind, die zwei gerade, einander gegenüberliegend angeordnete Klingen (11) umfassen, die beiderseits durch zwei Messerreihen (10) voneinander getrennt werden, wobei eine dieser Reihen in der einen Richtung geneigt ist und die andere in der anderen Richtung.

6. Vorrichtung gemäß einem der Ansprüche 1 bis 4, wobei um die Achse (2) des Rotors herum acht Messer oder Reihen von Messern vorgesehen sind, die zwei gerade, einander gegenüberliegend angeordnete Klingen (11) umfassen, die beiderseits durch drei Messerreihen (10) voneinander getrennt werden, wobei eine dieser Reihen in Bezug auf die Achse (2) des Rotors der Messer in der einen Richtung geneigt ist (10A), die nachfolgende in der anderen Richtung geneigt ist (10B) und die nachfolgende eine Reihe senkrecht stehender Messer darstellt (10C).

7. Vorrichtung gemäß einem der vorhergehenden Ansprüche, wobei die Messer (10) ein dreieckiges oder trapezförmiges scharfes Profil aufweisen.

8. Vorrichtung gemäß einem der vorhergehenden Ansprüche, wobei die Neigung des oder der Messer, die schräg in Bezug auf die Achse des Rotors verläuft, geringer als 45° ist und vorzugsweise zwischen 20 und 35° variiert.

## Claims

1. A vegetable product shredding apparatus comprising means supplying vegetable products (20), a part ejecting (7) shredded vegetable products and an intermediate chamber (6) comprising a rotor (12) secured to several knifes (10, 11), wherein at least one knife (10) has a perpendicular or inclined plane with respect to the shaft (2) of the rotor **characterized in that** at least one other knife (11) of the rotor is parallel to the shaft of the latter and cooperate with a counter-knife (8).

2. An apparatus according to claim 1 **characterized in that** there is provided a plurality of knives (10) arranged in at least two rows of knives which are parallel to the said shaft.

3. An apparatus according to claim 1 or claim 2, **characterized in that** there is provided a plurality of knives (10) arranged in at least two rows of knives; one row of knives being inclined in one direction and another row of knives being inclined in the other direction.

4. An apparatus according to claim 3, wherein the other row is the next row.

5. An a pparatus according to any one of the preceding claims, comprising about the shaft (2) of the rotor six knives or rows of knives comprising two opposed straight blades (11), spaced on opposed sides by two rows of knives (10), one of the rows being inclined in one direction and the other row in the other direction.

6. An apparatus according to any one of claims 1 to 4, comprising about the shaft (2) of the rotor eight knives or rows of knives comprising two opposed straight blades (11), spaced on opposed sides by three rows of knives (10), one of said rows being, with respect to the shaft (2) of the rotor, inclined knives in one direction (10a), the next row being inclined in the other direction (10b) and the next row presenting a row of perpendicular knives (10c).

7. An apparatus according to any one of the preceding claims, in which the knives (10) have a triangular or trapezoidal cutting profile.

8. An apparatus according to any of the preceding claims, in which the slant of the inclined knife or knives with respect to the shaft of the rotor is inferior to 45° and preferably ranges between 20 to 35°.
